# EUROPEAN PATENT APPLICATION

(11) **EP 2 249 541 A1**
(43) Date of publication of application: **10.11.2010**
(21) Application number: 09305414.6
(22) Date of filing: 07.05.2009
(51) Int. Cl.: H04L 29/06

(54) **Distribution of communication flows between two nodes linked by different network paths**

(71) Applicant: FRANCE TELECOM, 75015 Paris (FR)
(72) Inventor: Daud Triki, Khadija, 92130, ISSY LES MOULINEAUX (FR); Herbelin, Philippe, 94100, VINCENNES (FR)

(57) **Abstract**

A method is provided for distributing communication flows between two nodes (MN, CN). After a communication (C) has been set up between the two nodes, the following steps are implemented:
- each node (MN, CN) builds a common communication identifier (C_ID_1, C_ID 2, C_ID_3), which includes at least the source port, the destination port, the source IP address and the destination IP address for said communication (C);
- a session is set up for the purpose of said communication (C) such that, during the set up, the two nodes (MN, CN) inform each other about the communication identifier (C_ID_1, C_ID_2, C_ID_3) to be associated to the call-ID (CALL_ID_1, CALL_ID_2, CALL_ID_3) identifying said session; and
- a binding is created in each node (MN, CN) between said communication identifier (C_ID_1, C_ID_2, C_ID_3) and said call-ID (CALL_ID_1, CALL_ID_2, CALL_ID_3).

Application to switching an application, or a portion of an application, (app3) from a first path (P1) to a second path (P2) linking the two nodes (MN, CN).

## Description

### TECHNICAL FIELD

The present invention generally relates notably (but not exclusively) to the communication networks, for example of the IP (*"Internet Protocol*") type, which are able to implement advanced session-control protocols. IP networks are suitable for transmitting data such as "Voice over IP", "Content Sharing", "Presence" or "Instant Messaging".

More specifically, the present invention relates to the distribution of communication flows between two terminals over a plurality of communication paths.

### BACKGROUND OF THE INVENTION

Typical advanced session-control protocols include H.323 and SIP.

As explained in the "Wikipedia" on-line encyclopedia, "H.323 is an umbrella Recommendation from the ITU Telecommunication Standardization Sector (ITU-T) that defines protocols to provide audio-visual communication sessions on any packet network. The H.323 standard addresses call signaling and control, multimedia transport and control, and bandwidth control for point-to-point and multi-point conferences. It is widely implemented by voice and videoconferencing equipment manufacturers, is used within various Internet real-time applications such as NetMeeting, and is widely deployed worldwide by service providers and enterprises for both voice and video services over IP networks."

The SIP *("Session Initiation Protocol*") protocol has been defined by the IETF in the document "RFC 3261". In a device obeying this protocol, SIP functionalities are implemented by a logical entity called "User Agent" (UA), which, according to the circumstances, acts either as a client or as a server. This protocol allows the set up, modification and termination of multimedia sessions in an IP network. The SIP protocol also allows event notification procedures, and the sending of information outside of the context of a session. It is widely used for commands pertaining to instant messaging services. Thus, in a SIP environment, different types of communications exist, such as requests for setting up a session, and requests exchanged independently of any type of dialog. SIP also allows managing application mobility: to do that, when a terminal acquires a new IP address, it sends to its correspondent terminal a "SIP (Re)Invite" message which mentions the new IP address.

Advanced protocols such as H.323 and SIP notably use "signaling" messages: these messages allow a terminal to request a connection with another terminal; they are also used to signal that a telephone line is busy, or else that a called telephone is ringing, or else that such telephone is connected to the network and can be reached in such and such a manner.

The present invention is suitable for infrastructures of the IMS ("IP Multimedia Subsystem") type. IMS has been defined by the 3GPP ("3rd Generation Partnership Project") and TISPAN ("Telecommunications and Internet Converged Services and Protocols for Advanced Networking") standardization bodies. It is a network architecture introduced by 3GPP for mobile networks, and then applied by TISPAN to fixed networks. This architecture, which is SIP-based, allows the dynamic setting up of multimedia sessions between two clients, and the control of these sessions, as well as the reservation of resources in the network transporting the multimedia flows; it also allows network operators to apply policy control, to provide the targeted Quality of Service and to perform appropriate charging. IMS includes a "Session Description Protocol" (SDP) which describes the applications (codec, media type), as well as the "Real-Time Transfer" (RTP) ports and the IP addresses used in a session. Currently, IMS offers services such as telephony, visiophony, presence and instant messaging.

The present invention can be applied notably to non-IMS, and even to "non-SIP based" applications, that is, to applications which, for their setting up and management, do not natively require an advanced session-control protocol (such as H.323 or SIP). For example, the present invention can be applied to HTTP and FTP, which are natively based on TCP ("Transmission Control Protocol"). Non-SIP based applications may also use the "Stream Control Transmission Protocol" (SCTP), or the "User Datagram Protocol" (UDP) as a transport layer. TCP and SCTP are connection-oriented, whereas UDP is not (connection-oriented protocols are such that data can be exchanged only after a connection has been set up).

It is known from document RFC 4145 how to use SDP in order to set up a TCP connection. Indeed, given the advantages brought to network operators by the use of advanced session-control protocols, it is technically tempting to try and manage by means of such protocols applications which have not been initially designed for this purpose. However, a *priori,* this requires modifying these applications.

The present invention relates to applications (such as FTP) or portions of an application (for example the text part of a multimedia communication), which are characterized by data exchange between two endpoints in a communication network. In the frame of the present invention, the name "communication C" will be used to designate the communication used to support such an application, or portion of an application, between two given nodes by means of a specific transport protocol. Thus, a "communication C" provides notably for a source IP address, a destination IP address, and transport layer (UDP/TCP/SCTP) source and destination ports.

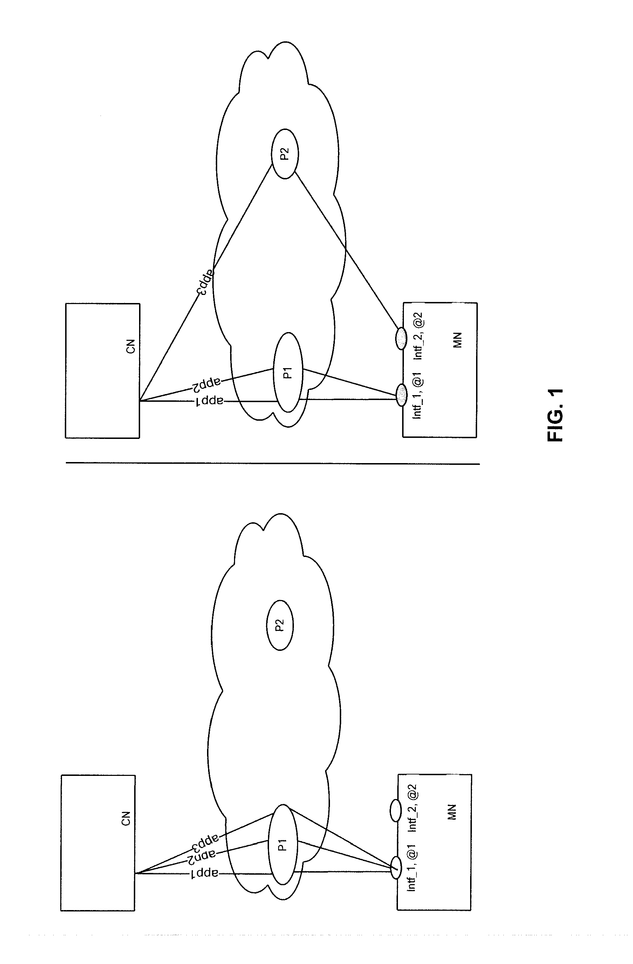

Let us consider the example illustrated in **Figure 1**. In this example, a first terminal, which will be called "Mobile Node" (MN), and a second terminal, which will be called "Correspondent Node" (CN), are linked by means of three non-SIP based applications (app1, app2, app3). Let us further assume that there are two possible network paths P1 and P2 connecting the MN and the CN.

There may then be a need originating either from the network or from one of the terminals to switch/distribute said ongoing applications on said available paths. There may be a need to transfer at least one of these applications from a first path to a second path, either because of an overload on the current path, or because the other path may be better-suited and allowing a higher Quality of Service for the specific application being transferred.

New paths may appear, for example, from terminal mobility, that is, as a result of a displacement of a terminal from the coverage area of a router to the coverage area of another router.

In another example, a terminal equipped with two interfaces may have initiated a WiFi connection through a first router, but then discover that there exists within its reach a second router offering a WiMax connection; the terminal may then decide to switch one of the ongoing applications, or application portions, to this second router. It should be noted that in this example the terminal may have remained at the same location; indeed, in the frame of the present invention, switching an application to a different path does not result necessarily from terminal mobility.

Now two different routers will typically assign two different addresses to this terminal. In Figure 1, app1, app2 and app3 have been set up over P1, and we assume that a decision has been made to switch app3 to path 2.

One finds in the prior art various ways to achieve such a switching.

If the connection is UDP-based, voice is transported over RTP/UDP. When one of the endpoints gets a new available IP address and wants to switch one of its applications to this IP address, it can do that locally and send data from it; however, it must inform the correspondent endpoint of the new destination IP address to be used.

If the connection is TCP-based, the replacement of the current IP address by the new one classically requires TCP connection breakage and setting up of a new TCP connection.

In order to maintain the ongoing TCP connection during a hand-over, patent US-7,184,418 proposes to use SIP to manage mobility for FTP-like applications. The key idea in this patent is to spoof constant TCP endpoints. An entity called "SIP_EYE" keeps track of ongoing TCP connections by monitoring TCP connection set-up and termination messages, and by storing a data structure for each of the TCP connections. This data structure is made up of four IP addresses:
- the original IP address of the MN (i.e. the IP address at the beginning of the TCP connection),
- the previous IP address of the MN (i.e. the last IP address just before the current one),
- the current IP address of the MN, and
- the original IP address of the CN.

The method used in patent US-7,184,418 to support mobile TCP applications comprises the following steps:
1) a TCP connection is set up;
2) the "SIP_EYE" agent of the MN identifies the endpoints of the TCP connection by examining the headers of the TCP packets; it creates and keeps the data structure including the original IP address of the MN, its previous IP address, its current IP address and the original address of the CN; the three first addresses are the same at the beginning of the TCP connection;
3) the MN and the CN exchange data through the TCP connection;
4) the MN moves and acquires a new IP address;
5) the MN sends a "SIP INFO" message to the CN with its new IP address;
6) upon receiving the SIP INFO, the CN binds the old IP address of the MN with the new one;
7) the CN sends a "SIP 200 OK" response to the MN;
8) the SIP_EYE agent of the MN updates the data structure with the new IP address of the MN;
9) the CN uses IP-encapsulation to send TCP packets displaying the initial source and destination address to the current location of the MN; and
10) the MN uses IP-encapsulation of its previous address with the new one to send TCP packets to the CN.

Concerning, finally, SCTP-based applications, the article by Yuh-Shyan Chen, Kau-Lin Chiu and Ren-Hung Hwang entitled "SmSCTP: SIP-Based MSCTP Scheme for Session Mobility over WLAN/3G Heterogeneous Networks", IEEE 2007, proposes to use SIP to manage mobility for non-SIP based applications. According to this article, a "Mobile SCTP" (m-SCTP) signaling is exchanged to inform the correspondent endpoint of the new IP address to be used as a destination address. Specifically, two new SIP messages from the MN to the CN are being proposed:
- the first SIP message enables the MN to notify the CN about its new IP address; when the CN receives this message, it updates the pool of its possible destination addresses; and
- the second SIP message enables the MN to confirm its real location to the CN; when the CN receives this SIP message, it orders its SCTP layer to change its primary destination address to the indicated IP address.

All such prior art solutions for managing non-SIP based applications by means of SIP messages are deficient in that the IP address-change information contained in those SIP messages necessarily applies to all ongoing non-SIP based applications set up between the two nodes. This is because, in case of a plurality of ongoing applications, a node which has been notified of a new IP address by another node does not possess any means to recognize which particular application is concerned by this new IP address.

### SUMMARY OF THE INVENTION

In a first aspect of the present invention, a method is provided for distributing communication flows between two nodes. This method comprises, after a communication between two nodes has been set up, the following steps:
- each node builds a common communication identifier, which includes at least the source port, the destination port, the source IP address and the destination IP address for said communication;
- a session is set up for the purpose of said communication such that, during the set up, the two nodes inform each other about the communication identifier to be associated to the call-ID identifying said session; and
- a binding is created in each node between said communication identifier and said call-ID.

Thus, the present invention provides for the creation of:
- a session for each ongoing communication, and
- a one-to-one binding between each such session and the corresponding communication.

Thanks to the present invention, any path change may be applied specifically to a chosen application, or portion of an application, on a given node, and information about this path change may be transmitted to the correspondent node.

This is why a method for communication handover following a path-switching decision is also provided. This method comprises, after a handover decision for an ongoing communication from a first path to a second path linking said two nodes has been taken, the following steps:
- the call-ID of the session associated to said communication is identified on the basis of the corresponding communication identifier;
- the new path information is transmitted to at least one of the two nodes by means of an update message belonging to said session;
- after receiving said update message, said at least one node identifies the associated communication on the basis of the call-ID corresponding to this update message and of said binding in this at least one node; and
- said at least one node stores the new path information with respect to said communication.

Thanks to these provisions, different handover decisions can be taken for each of the ongoing communications. Most advantageously, this goal is achieved without having to amend any supported application.

Furthermore, this update message may conveniently also comprise information about congestion along the new path.

When a decision to shutdown a communication has been taken, the two nodes preferably each destroy said binding between the communication identifier corresponding to this communication and the call-ID of the associated session, in order to free the corresponding memory locations.

In a second aspect of the present invention, a terminal for allowing the distribution of communication flows is provided. This terminal comprises means for, after a communication between said terminal and a correspondent node has been set up:
- building a communication identifier, which includes at least the source port, the destination port, the source IP address and the destination IP address for said communication;
- setting up a session for the purpose of said communication such that, during the set up, the terminal informs, or is informed by, the correspondent node about the communication identifier to be associated to the call-ID identifying said session; and
- creating a binding between said communication identifier and said call-ID.

According to particular provisions, said terminal further comprises means for, after a handover decision for an ongoing communication from a first path to a second path linking said two nodes has been taken, and after the call-ID of the session associated to said communication has been identified on the basis of the corresponding communication identifier:
- storing the new path information with respect to said communication;
   and
- transmitting to said correspondent node an update message belonging to said session and containing the new path information.

According to other particular provisions, said terminal further comprises means for, after a handover decision for an ongoing communication from a first path to a second path linking said two nodes has been taken, and after the call-ID of the session associated to said communication has been identified on the basis of the corresponding communication identifier:
- receiving an update message belonging to said session and containing the new path information;
- identifying the corresponding communication on the basis of said binding and of the call-ID corresponding to said update message; and
- storing the new path information with respect to said communication.

The advantages of these terminals are essentially the same as the advantages of the method according to the invention.

In a third aspect of the present invention, non-removable, or partially or totally removable data storage means are provided. These data storage means contain electronic data-processing program code instructions for executing the steps of a method as succinctly described above.

Finally, in a fourth aspect of the present invention, a computer program is provided. This computer program contains instructions such that, when said program controls a programmable data-processing device, said instructions cause said data-processing device to execute a method as succinctly described above.

The advantages of these data storage means and this computer program are essentially the same as the advantages of the method and terminal according to the invention.

Furthermore, it is possible, according to particular embodiments of the invention described below, to satisfy further desirable constraints.

### BRIEF DESCRIPTION OF THE DRAWINGS

The invention will be explained more fully below in connection with particular embodiments provided as non-limitative examples, and with reference to the drawings, in which:
- Figure 1, already described above, illustrates a practical example of switching an application from a first path to a second path;
- Figure 2 is the flowchart of a binding method according to an embodiment of the invention;
- Figure 3 is the flowchart of a communication handover after a switching decision according to an embodiment of the invention; and
- Figure 4 is the flowchart of a communication shutdown according to an embodiment of the invention.

### DETAILED DESCRIPTION

Referring again to Figure 1, let us consider, as a concrete example, the scenario proposed above, in which three ongoing communications have been set up by means of "non-SIP based" applications (app1, app2 and app3) between a client node MN (for example, a mobile terminal) and a correspondent node CN (for example, a server). These communications may use two network paths (P1 and P2) between the MN and the CN in the communication network.

In the present embodiment, the SIP protocol is being used. As a variant, one may as well use another session-control protocol, preferably of an advanced type, such as H.323.

According to the invention, to each communication C is associated a communication identifier designated by "C_ID", which contains at least the source port, the destination port, the source IP address and the destination IP address.

C_ID may conveniently be arranged as the concatenation of these four pieces of information, and transported in a dedicated field of SIP messages. As a variant, the corresponding pieces of information may of course be transported in separate dedicated fields of SIP messages.

It will be recalled that, in the SIP protocol, a "session" consists of a series of requests/responses between two nodes. Each particular session is uniquely identified by a string of characters called "call-ID".

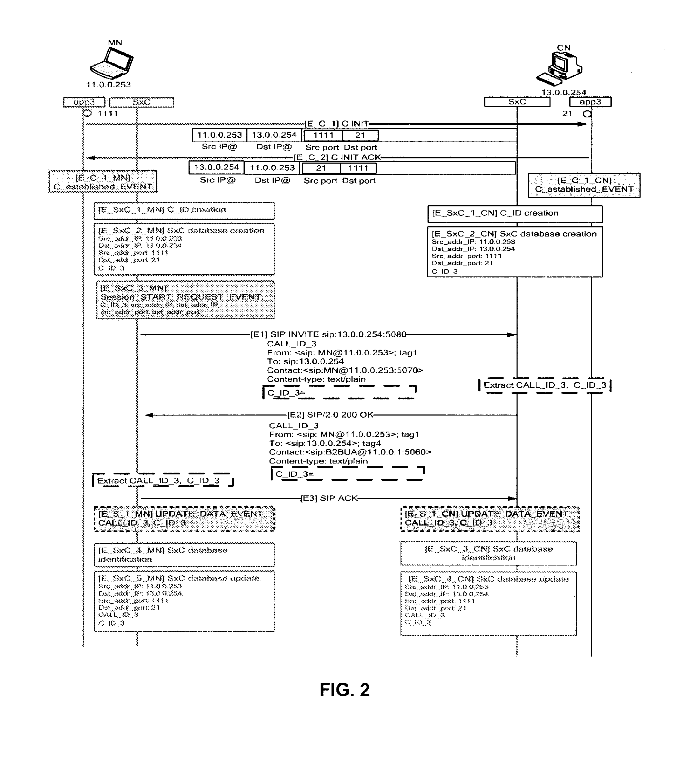

In the present embodiment, both nodes implement a function which will be called "SxC". When SxC detects that a communication C has been initiated between the two nodes MN and CN, it proceeds to the creation of a binding between the communication identifier C_ID associated with this communication C and the call-ID associated with the corresponding SIP session, as illustrated in **Figure 2****.**

The binding method according to this embodiment comprises in particular:
- steps [E_C_1] and [E_C_2], wherein a communication C to support application app3 is set up between the MN and the CN, and
- steps [E1], [E2] and [E3], wherein a SIP session having a call-ID designated by "CALL_ID_3" is set up between the MN and the CN.

First, the steps performed by the caller, and then the steps performed by the called party will now be described.

Assuming that the MN is the caller, the MN User Agent (UA), behaving as a client, performs the following steps.

In step [E_C_1_MN], after the set up of communication C, a C_established_EVENT is generated by the transport-layer protocol used by C, with src_addr(_IP/_port) (containing the source IP address and port) and dst_addr(_IP/_port) (containing the destination IP address and port) as parameters.

In step [E_SxC_1_MN], after detecting C_established_EVENT event, the SxC in the MN creates a communication identifier designated by "C_ID_3".

In step [E_SxC_2_MN], the SxC creates a database instance and fills it with C_ID_3 and with the C-related parameters src_addr(_IP/_port) and dst_addr(_IP/_port).

In step [E_SxC_3_MN], when the data structure is filled on the client side, SxC generates SESSION_START_REQUEST_EVENT with the following arguments: src_addr (IP/_port), dst_addr(_IP/_port), C_ID_3.

In step [E1], when SESSION_START_REQUEST_EVENT is detected at the SIP level, the UA in the MN sets up a SIP session with the remote SIP UA in the CN. To do this, SESSION_START_REQUEST_EVENT arguments are used to fill-in fields of a SIP INVITE message. The src_addr_IP is used for the "Contact" and "From" fields of the INVITE message. The dst_addr_IP address is used as requested URI and "To" field. The information contained in C_ID_3 is transmitted within this SIP message.

In step [E_S_1_MN], when the UA in the MN receives a SIP 200 OK message from the CN, an UPDATE_DATA_EVENT is generated with C_ID_3 and CALL_ID_3 as arguments.

In step [E_SxC_4_MN], when SxC detects UPDATE_DATA_EVENT, it uses C_ID_3 to identify the C communication to which the SIP session will be bound.

Finally, in step [E_SxC_5_MN], SxC updates the corresponding database instance by adding CALL_ID_3.

Assuming that the CN is the called party, the UA in the CN, behaving as a server, performs the following steps.

In step [E_C_1_CN], after the set up of a C communication, a C_established_EVENT is generated by the transport-layer protocol used by C, with src_addr(_IP/_port) and dst_addr(_IP/_port) as parameters.

In step [E_SxC_1_CN], after detecting C_established_EVENT, the SxC in the CN creates a communication identifier C_ID_3 having same value as the above-mentioned communication identifier in the MN.

In step [E_SxC_2_CN], the SxC creates a database instance, and fills it with C_ID_3 and with the C-related parameters src_addr(IP/_port) and dst_addr(_IP/_port).

In step [E_S_1_CN], when the UA in the CN receives a SIP ACK message, it generates UPDATE_DATA_EVENT with C_ID_3 and CALL_ID_3 as arguments.

In step [E_SxC_4_CN], when SxC detects UPDATE_DATA_EVENT, it uses C_ID_3 to identify the C communication to which the SIP session will be bound.

Finally, in step [E_SxC_5_CN], SxC updates the corresponding database instance by adding CALL_ID_3.

Optionally, it might be useful to record, additionally, said binding between CALL_ID_3 and C_ID_3 in some third party network entity other than the two nodes.

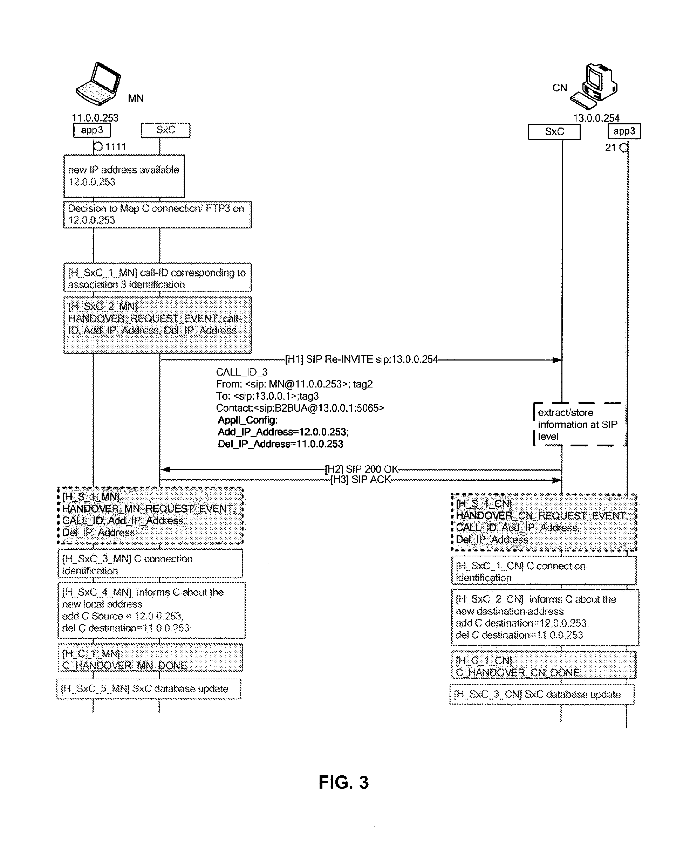

A method for communication handover after a path-switching decision has been taken will now be described, with reference to **Figure 3****.**

In the practical example considered here, it is assumed that a decision to switch app3 to path 2 has been generated in, or received by, the MN, wherein path 1 is identified by IP address 11.0.0.253, and path 2 is identified by IP address 12.0.0.253.

First, the steps performed by the MN, and then the steps performed by the CN will now be described.

The steps performed by the MN are as follows.

In step [H_SxC_1_MN], the SxC in the MN determines, on the basis of the binding described above with reference to Figure 2, the call-ID of the SIP session corresponding to the C communication supporting app3; as a variant, in case the bindings between call-ID and C_ID are recorded in some third party network entity other than the two nodes, this determination could be instead implemented by this network entity.

In step [H_SxC_2_MN], SxC generates HANDOVER_ REQUEST_EVENT with CALL_ID_3, Add_IP_address (namely, the new address 12.0.0.253), and Del_IP_Address (namely, the previous address 11.0.0.253) as arguments.

In step [H1], when detecting HANDOVER_ REQUEST_EVENT. SIP sends a re-INVITE message to the CN with a dedicated header Appli_config comprising Add_IP_address and Del_IP_Address.

Furthermore, this re-INVITE message may conveniently also comprise information about congestion along the new path.

As a variant, in case the determination of the call-ID of the SIP session corresponding to the C communication supporting app3 was implemented by a third party network entity, step [H_SxC_1_MN] is performed in this entity, and steps [H1], [H2] and [H3] are implemented by this entity with respect to the MN and the CN. After this, the MN will perform analogous steps as those performed by the CN ([H_S_1_CN], [H_SxC_1_CN], [H_SxC_2_CN], [H_C_1_CN] and [H_SxC_3_CN]) as described below.

In step [H2], the UA in the MN receives an OK message.

In step [H3], the UA in the MN sends an ACK message.

In step [H_S_1_MN], the SIP protocol generates HANDOVER_MN_REQUEST_EVENT, which includes CALL_ID_3, Add_IP_address and Del_IP_Address.

In step [H_SxC_3_MN], when SxC detects HANDOVER_MN_REQUEST_EVENT, it identifies the associated C communication.

In step [H_SxC_4_MN], SxC informs, by means of Add_IP_address, the C transport-protocol about the new source address of the C communication.

In step [H_C_1_MN], the C transport-protocol generates C_HANDOVER_DONE_EVENT.

Finally, in step [H_SxC_5_MN], when SxC detects HANDOVER_DONE_EVENT, it updates the corresponding database instance.

The steps performed by the CN are as follows.

In step [H_S_1_CN], when the UA in the CN receives the ACK message, it generates HANDOVER_CN_REQUEST_EVENT with CALL_ID_3, Add_IP_Address, and Del_IP_Address as arguments.

In step [H_SxC_1_CN], when SxC detects HANDOVER_CN_REQUEST_EVENT, it determines the C communication corresponding to CALL_ID_3.

In step [H_SxC_2_CN], SxC informs, by means of, respectively, Add_IP_Address and Del_IP_address, the transport-protocol of the identified C communication about, respectively, the new and the old IP addresses.

In step [H_C_1_CN], when the C transport-protocol receives the parameters transmitted by SxC, it generates C_HANDOVER_CN_DONE.

Finally, in step [H_SxC_3_CN], when SxC detects C_HANDOVER_CN_DONE, it updates the corresponding database instance.

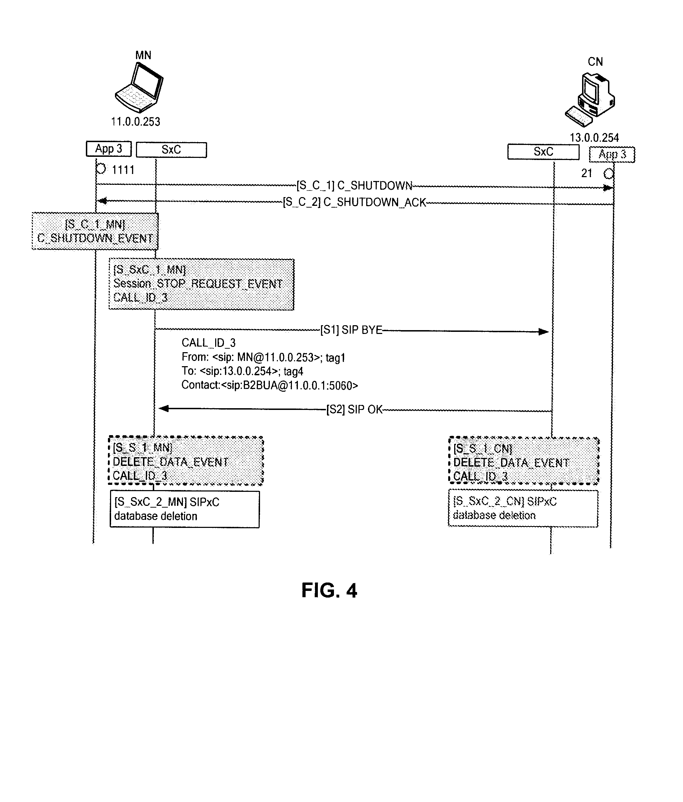

A method for communication shutdown will now be described, with reference to **Figure 4****.**

This shutdown method comprises in particular:
- steps [S_C_1] and [S_C_2], wherein the MN and the CN exchange standard C signaling to close the C communication, and
- steps [S1] and [S2], wherein the SIP session associated to the C communication is closed.

First, the steps performed by the MN, and then the steps performed by the CN will now be described.

The steps performed by the MN are as follows.

In step [S_C_1_MN], after receiving a C_SHUTDOWN_ACK message, the C protocol generates C_SHUTDOWN_EVENT.

In step [S_SxC_1_MN], when SxC detects C_SHUTDOWN_EVENT, it identifies the corresponding call-ID, namely CALL_ID_3, and generates SESSION_STOP_REQUEST with CALL_ID_3 as an argument.

In step [S1], when the UA in the MN receives SESSION_STOP_REQUEST, it sends a SIP BYE message (which does not need to include any specific information).

In step [S_S_1_MN], after receiving a SIP 200 OK message, the UA in the MN generates DELETE_DATA_EVENT with CALL_ID_3 as an argument.

Finally, in step [S_SxC_2_MN], after detecting DELETE_DATA_EVENT, SxC deletes the associated database instance.

The steps performed by the CN are as follows.

In step [S_S_1_CN], when the UA in the CN receives the SIP BYE message, it generates DELETE_DATA_EVENT with CALL_ID_3 as an argument.

Finally, in step [S_SxC_2_CN], after detecting DELETE_DATA_EVENT, SxC deletes the associated database instance.

To conclude, some additional description will now be provided with respect to the use of specific transport protocols. Indeed, the implementation of the above-described steps [H_SxC_4_MN] (see Figure 3) and [H_SxC_2_CN] (see Figure 4) is dependent upon the chosen transport protocol.

In case one chooses the UDP protocol, the following steps should be preferably be implemented:
- in step [H_SxC_4_MN], the MN uses the new address as a source address; and
- in step [H_SxC_2_CN], the CN uses the new destination address.

In case one chooses the TCP protocol, these steps should preferably be implemented in a way analogous to the implementation in the above-presented patent US-7,184,418. More specifically, step [H_SxC_2_CN] comprises the tunneling of IP packets towards the new MN address, and step [H_SxC_4_MN] comprises the tunneling of IP packets from the new MN address.

Finally, in case one chooses the SCTP protocol, these steps should preferably be implemented in a way analogous to the implementation in the above-presented article entitled *"SmSCTP: SIP-Based MSCTP Scheme for Session Mobility over WLAN*/*3G Heterogeneous Networks".* More specifically:
- on the CN side, by means of H_SxC_2_CN, the CN modifies its destination address; and
- on the MN side, by means of H_SxC_MN, the MN modifies its source address.

As mentioned above, the present invention also relates to a computer system implementing a method for distributing communication flows between two nodes according to the invention. This computer system classically comprises an input unit, an output unit, and a central processing unit commanding a memory.

Furthermore, this computer system can be used to execute a computer program comprising instructions for implementing the method according to the invention.

Indeed, the invention also relates to a computer program, which can for example be downloaded through a communication network, and comprising instructions for implementing the steps of a method according to the invention when this program is executed by a computer. This computer program can be executed by a microprocessor, and can be stored in a data storage means which can be read by a computer.

This computer program may be written in any programming language, and be written as a source code, an object code, or a code intermediary between a source code and an object code, in a partially or totally compiled form.

The invention also relates to data storage means which can be read by a computer and comprising the instructions of a computer program as described above.

## Claims

1. A method for distributing communication flows between two nodes, comprising, after a communication (C) between two nodes (MN, CN) has been set up, the following steps:
- each node (MN, CN) builds a common communication identifier (C_ID_1, C_ID_2, C_ID_3), which includes at least the source port, the destination port, the source IP address and the destination IP address for said communication (C);
- a session is set up for the purpose of said communication (C) such that, during the set up, the two nodes (MN, CN) inform each other about the communication identifier (C_ID_1, C_ID_2, C_ID_3) to be associated to the call-ID (CALL_ID_1, CALL_ID_2, CALL_ID_3) identifying said session; and
- a binding is created in each node (MN, CN) between said communication identifier (C_ID_1, C_ID_2, C_ID_3) and said call-ID (CALL_ID_1, CALL_ID_2, CALL_ID_3).

2. A method according to claim 1, **characterized in that,** after a handover decision for an ongoing communication (C) from a first path (P1) to a second path (P2) linking said two nodes (MN, CN) has been taken, said method further comprises the following steps:
- the call-ID (CALL_ID_3) of the session associated to said communication (C) is identified on the basis of the corresponding communication identifier (C_ID_3);
- the new path information is transmitted to at least one of the two nodes (MN, CN) by means of an update message belonging to said session;
- after receiving said update message, said at least one node (MN, CN) identifies the associated communication (C) on the basis of the call-ID (CALL_ID_3) corresponding to this update message and of said binding in this at least one node (MN, CN); and
- said at least one node (MN, CN) stores the new path information with respect to said communication (C).

3. A method according to claim 2, **characterized in that** said update message also comprises information about congestion along the new path.

4. A method according to claim 1, **characterized in that**, after a decision to shutdown a communication (C) has been taken, said two nodes (MN, CN) each destroy said binding between the communication identifier (C_ID_3) corresponding to this communication (C) and the call-ID (CALL_ID_3) of the associated session.

5. A method according to any of claims 1 to 4, **characterized in that** said communication identifier (C_ID) is transported in a dedicated field of signaling messages.

6. A method according to any of claims 1 to 4, **characterized in that** pieces of said communication identifier (C_ID) are transported in a plurality of dedicated fields of signaling messages.

7. A method according to any of claims 1 to 6, **characterized in that** said session is controlled by an H.323 protocol.

8. A method according to any of claims 1 to 6, **characterized in that** said session is controlled by a SIP protocol.

9. A terminal for allowing the distribution of communication flows, comprising means for, after a communication (C) between said terminal (MN) and a correspondent node (CN) has been set up:
- building a communication identifier (C_ID_1, C_ID_2, C_ID_3), which includes at least the source port, the destination port, the source IP address and the destination IP address for said communication (C);
- setting up a session for the purpose of said communication (C) such that, during the set up, the terminal (MN) informs, or is informed by, the correspondent node (CN) about the communication identifier (C_ID_1, C_ID_2, C_ID_3) to be associated to the call-ID (CALL_ID_1, CALL_ID_2, CALL_ID_3) identifying said session; and
- creating a binding between said communication identifier (C_ID_1, C_ID_2, C_ID_3) and said call-ID (CALL_ID_1, CALL_ID_2, CALL_ID_3).

10. A terminal according to claim 9, **characterized in that** it further comprises means for, after a handover decision for an ongoing communication (C) from a first path (P1) to a second path (P2) linking said two nodes (MN, CN) has been taken, and after the call-ID (CALL_ID_3) of the session associated to said communication (C) has been identified on the basis of the corresponding communication identifier (C_ID_3):
- storing the new path information with respect to said communication (C); and
- transmitting to said correspondent node (CN) an update message belonging to said session and containing the new path information.

11. A terminal according to claim 9, **characterized in that** it further comprises means for, after a handover decision for an ongoing communication (C) from a first path (P1) to a second path (P2) linking said two nodes (MN, CN) has been taken, and after the call-ID (CALL_ID_3) of the session associated to said communication (C) has been identified on the basis of the corresponding communication identifier (C_ID_3):
- receiving an update message belonging to said session and containing the new path information;
- identifying the corresponding communication (C) on the basis of said binding and of the call-ID (CALL_ID_3) corresponding to said update message; and
- storing the new path information with respect to said communication (C).

12. A terminal according to any of claims 9 to 11, **characterized in that** it is a mobile user equipment.

13. A terminal according to any of claims 9 to 11, **characterized in that** it is a network server.

14. Non-removable, or partially or totally removable data storage means containing electronic data-processing program code instructions for executing the steps of a method according to any one of claims 1 to 8.

15. A computer program containing instructions such that, when said program controls a programmable data-processing device, said instructions cause said data-processing device to execute a method according to any one of claims 1 to 8.
